# EUROPEAN PATENT SPECIFICATION

(11) **EP 1 356 171 B1**
(45) Date of publication and mention of the grant of the patent: **14.11.2007**
(21) Application number: 02710604.6
(22) Date of filing: 30.01.2002
(51) Int. Cl.: E04B 2/76, B62D 33/04

(54) **DETACHABLE PARTICIONING WALL**
LÖSBARE TRENNWAND
PAROI DE SEPARATION AMOVIBLE

(30) Priority: 01.02.2001 SE 0100290
(43) Date of publication of application: 29.10.2003
(73) Proprietor: Safe Load International AB, 534 50 Vara (SE)
(72) Inventor: PERSSON, Lennart, S-534 94 Vara (SE); ERIKSSON, Arne, S-553 21 Jönköping (SE)
(74) Representative: Lind, Urban Arvid Oskar
(86) International application number: PCT/SE2002/000159
(87) International publication number: WO 2002/061218

(56) References cited:
- EP-A1- 0 365 773
- DE-A- 19 728 640
- DE-A1- 19 856 542
- GB-A- 1 488 302
- NL-A- 7 600 742

## Description

### Field of the Invention

The present invention relates to a detachable partition wall, comprising at least one relatively rigid wall section and at least one beam connected thereto for fixing the wall section in the desired position. The invention further relates to a beam for use in such a wall and a method of manufacture.

### Background Art

In many cases, it is desirable to introduce detachable partition walls to divide a large space into several smaller spaces. For example, it is often desirable to divide large office premises into smaller spaces. In particular, it is in many cases important to partition off spaces because you want different conditions in different spaces. For example, it is often desirable to partition off cold-storage spaces to allow different temperatures to be maintained in the different spaces. Furthermore, it is often desirable to partition off cargo spaces in trains, ships, lorries and other goods vehicles and craft. This allows the cargo to be stored separately, which is often desirable. Moreover, in transports of refrigerated or frozen cargo it is also often desirable to be able to maintain different temperatures in different spaces.

It is known to arrange cloths, blankets, curtains and other similar dividing elements to achieve such a division of spaces. However, these are awkward to use as they have a tendency to move, etc. Normally, they do not support any loads applied thereto and are difficult to mount and remove.

It is also known to use rigid partition walls to achieve such a division of cargo spaces. However, these prior-art partition walls are difficult to mount and dismount. They are normally mounted in fixed rails or holders in the cargo space, which means that the positioning and fastening thereof is complicated and time-consuming and only allows them to be mounted in certain predetermined positions. Moreover, the assembly and disassembly is often heavy and complicated work, which in many cases has to be carried out from a poor working position.

In view of the above, there is a need for rigid partition walls which are more flexible and easier to assemble.

A further problem associated with prior-art partition walls is that they are relatively large and heavy, which makes them cumbersome and which means that they take up more of the precious cargo space than is necessary.

Finally, these prior-art, rigid partition walls are often expensive and difficult to manufacture.

DE A 197 28 640 discloses a beam which may be clamped between, for example, floor and ceiling for holding and displacing along the beam an object attached thereto, such as a working surface.

NL A 7600742 discloses a beam for holding a partitioning wall for use in a room in a building. The beam disclosed in this document has one part which is displaceable inside the other.

DE 198 56 542 discloses a partition wall including a row of telescopic beams and wall panels attached thereto. The telescopic beams consist of two beams having a larger rectangular cross-section and one beam having a smaller rectangular cross-section inserted in the two beams having the larger cross-section. A spiral spring is arranged between the beam having the smaller cross-section and one of the beams having the larger cross-section, and an adjustable coupling is arranged between the beam having the smaller cross-section and the other beam having the larger cross-section. At least one side of the beams having the larger cross-section is covered by adhesive tape or similar for attachment of the wall panels thereto.

The partition wall disclosed in DE 198 56 542 appears not to be suitable for partitioning off cargo spaces in connection with cargo transports, since the partition wall would require disassembly before it can be moved. Furthermore, it is questionable whether a sufficiently high and constant pressure can be exerted between floor and ceiling to deal with a varying distance therebetween, as is often the case in connection with cargo transports.

### Object of the Invention

It is therefore an object of the present invention to provide a partition wall of the type stated above, and a method of manufacture, which solves the problems associated with prior art completely or at least partially.

This object is achieved by a partition wall, and a method as defined in the claims.

### Summary of the Invention

The present invention relates to a detachable partition wall as defined by claim 1.

This allows the displaceable part to be locked in a contracted position. The partition wall can then be positioned and aligned, upon which the lock is released and the displaceable part pressed outward to hold the wall in place. This means that the partition wall can be mounted very rapidly, efficiently and smoothly without heavy lifting and complicated fitting. Furthermore, poor working positions can be avoided. The application of the partitioning wall in the desired position is not restricted by fixed guides and fastening devices. This increases flexibility and usability and allows the wall to be easily moved. The simple fastening also allows a partition wall according to the invention to be made extremely light without this affecting its stability or durability. Further, the simple fastening considerably reduces the risk of injuries caused by crushing or the like.

It is particularly preferred for the guide to consist of a second beam part (3) which is fixedly connected to the wall section (1), the displaceable beam part (4) being preferably telescopically displaceable in the second beam part.

This allows the beam to be manufactured separately from a rigid material and to be fixed to the wall section during mounting.

It is further preferred for the beam part, at least at the projecting end, to be provided with a pad (7) of a flexible material, preferably an at least somewhat elastically resilient material such as rubber. This affords increased friction against the support surface, and, thus, the partition wall is held in place in a more efficient manner. Furthermore, it allows a certain play in terms of the distance.

According to a preferred embodiment, the actuator is a spring (5), preferably a gas spring or a coil spring. A simple and efficient construction may thus be obtained. At the same time, a constant retaining force is obtained; which, for example, allows a certain play in terms of the distance. This is particularly important when the partition wall is being used in lorries, trains, ships and other mobile vehicles and craft, since the walls and ceilings will move slightly relative to one another during transport. However, in the partition wall of the invention, the spring exerts a constant pressure, which may absorb such movements without the wall being damaged or moved from its position.

Preferably, the locking means is a snap lock means (6) which, when in a locked position, locks the displaceable beam part (4) and, when in an open position, allows displacement thereof. This allows the lock to be released by means of a simple operation, affording simple and efficient mounting of the partition wall.

Moreover, the guide advantageously comprises an opening and the displaceable beam part comprises a support (9) in the corresponding position for applying a tool (10) adapted to produce a relative displacement of the beam part (4) and the guide (3). This makes it easier to return the displaceable part to a locked contracted position and, thus, to remove the wall.

It is particularly preferred for the tool (10) to be detachable. Thus, no additional space will be taken up by projecting handles and the like, and the same handle can be used for a plurality of walls, which makes the product easier and less expensive to manufacture.

It is particularly preferred for the wall section to comprise two wall panels and an insulating material (14) arranged in the space between said panels. This allows an efficient separation of temperatures to be obtained in a simple and efficient manner in, for example, cold-storage rooms or cargo spaces intended for refrigerated or frozen goods.

The invention further relates to a beam for use in a partition wall as described above, and a method of manufacturing such a partition wall.

### Brief Description of the Drawings

The invention will be described in more detail in the following by means of one embodiment and with reference to the accompanying drawings, in which
Fig. 1 is a perspective view of part of a partition wall in accordance with one embodiment of the invention, the partition wall being shown in its assembled position;
Fig. 2 is cross-sectional view of part of a partition wall in accordance with one embodiment of the invention;
Fig. 3 is a view of a beam for use in a partition wall according to Fig. 1, the beam being shown in its expanded position;
Fig. 4 is a view of the beam of Fig. 3, the beam being shown in its contracted position;
Fig. 5 is an exploded view of the beam of Fig. 3 and Fig. 4;
Fig. 6 is a view of a cargo space in a goods vehicle, in which two partition walls in accordance with one embodiment of the invention have been arranged side by side for partitioning off the cargo space;
Fig. 7 is a view of the cargo space of Fig. 6, in which, instead, three partition walls in accordance with one embodiment of the invention have been arranged side by side for partitioning off the cargo space; and
Fig. 8 is a view of the cargo space of Fig. 6, in which partition walls in accordance with one embodiment of the invention have been arranged at an angle for partitioning off the cargo space.

### Description of Preferred Embodiments

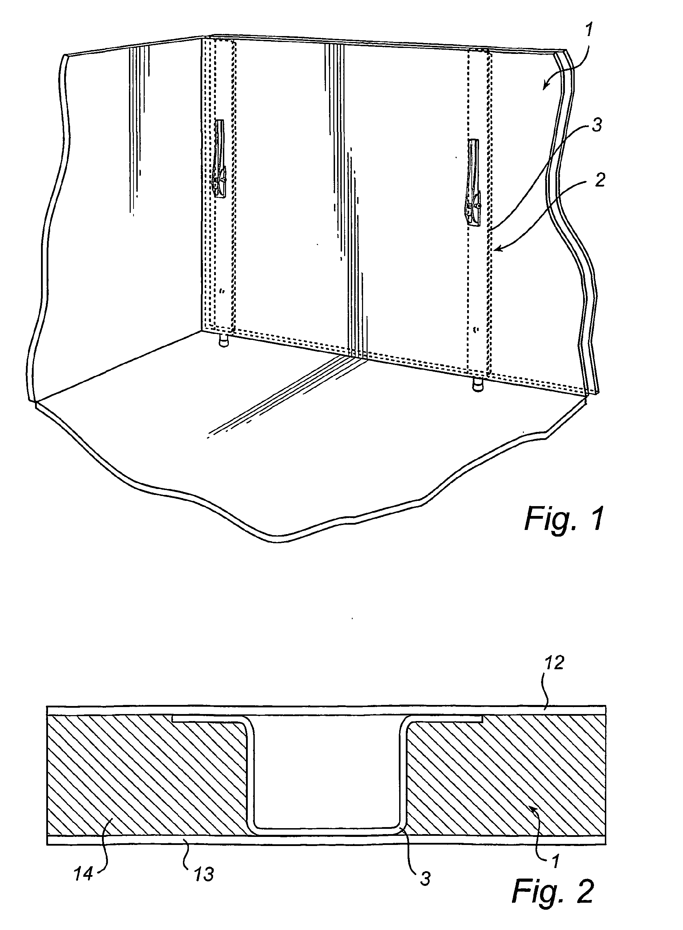

A detachable partition wall in accordance with one embodiment of the invention, as shown in Figs 1 and 2, comprises at least one relatively rigid wall section 1 and at least on beam 2 connected thereto for fixing the wall section in the desired position. The wall section comprises a guide and the beam comprises a part 4 which is displaceable in the guide of the wall section. Preferably, the guide consists of a second beam part 3, which is fixedly connected to the wall section 1, the displaceable beam part 4 being preferably telescopically displaceable in the second beam part. Suitably, the length of travel in terms of displaceability of the displaceable beam part should be at least 10 cm, preferably about 30 cm. Furthermore, it is preferred for the actuator to exert a force of at least 50 kg, preferably about 75 kg.

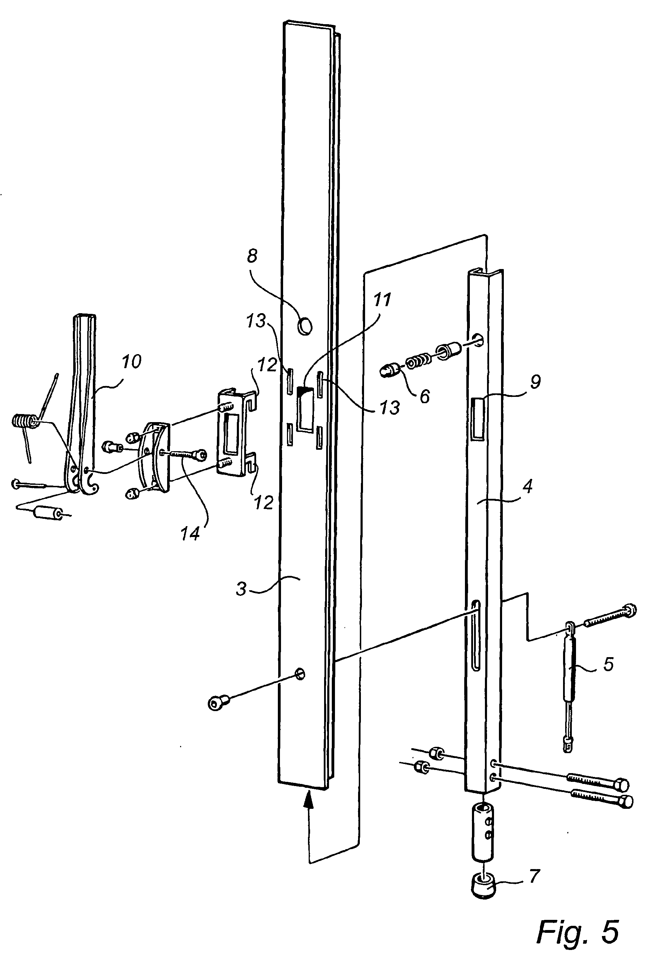

In a preferred embodiment, the fixedly arranged guide is a hollow beam, in which a smaller, displaceable beam is arranged, as shown, for example, in Fig. 5. The beams may, for instance, be manufactured from bent sheet profiles made of, for example, galvanized sheet. It is particularly suitable for the beam sections to be relatively flat since this allows a thin and less space-requiring wall to be obtained.

Moreover, it is suitable for the base of the displaceable beam to be provided with length adjusting means, such as different fastening positions, to allow the length of the beam to be adapted and adjusted depending on the physical environment. Other ways of providing for this type of adjustment are also possible.

Naturally, the beam parts can be made with different lengths and, furthermore, the gas piston can be arranged at different levels in the beam parts. The beams may also be arranged in a portion of the partition wall, in which case the length of the beam parts only has to constitute part of the height of the partition wall.

An actuator 5 is connected to the displaceable part and the guide in order to produce a relative movement therebetween. Preferably, the actuator may be a spring 5, preferably a gas spring or a coil spring. However, other actuators are also conceivable, such as hydraulic pistons or pneumatic compressed-air pistons. Advantageously, the actuator may be arranged inside one of the beam parts.

In the case where the actuator is a gas piston 5 having one gas chamber, said chamber is preferably divided into two sections by means of a partition (not shown) which is connected to a piston rod and displaceable in the chamber. In this manner, the relative sizes of the chamber sections may be changed while the total chamber volume remains constant. Furthermore, one of the chamber sections is preferably provided with an opening which is optionally openable and closable by means of a valve. By providing excess pressure in the other chamber section, a user may thus control the amount of air that is let out from (or let into) said one chamber section by means of the valve and thus control the displacement of the piston rod relative to the piston. The valve here serves as a locking means, which in the open position allows contraction and expansion, respectively, of the gas piston, but which in the closed position locks said piston in the then position thereof.

Although the type of gas piston described above is preferred in the present embodiment, there are several other types of gas springs which provide similar functions and which, of course, may be used instead of the one described above.

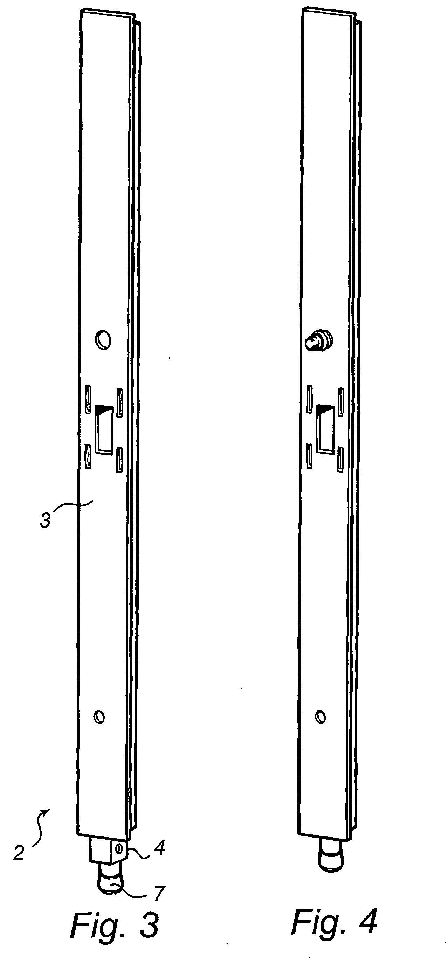

However, there are also other ways of providing locking means for locking the displaceable part in relation to the wall section at least in a contracted position. For example, a snap lock means may be used. The snap locking means may, for example, comprise a spring-loaded locking pin 6, which is displaceable in a direction that does not coincide with the direction of displacement of the displaceable beam part and that is preferably perpendicular thereto, said locking pin being adapted to interact with a corresponding recess or opening (8) for allowing the locking pin to be displaced in order to lock the displaceable beam part. This is illustrated in Fig. 3 and Fig. 4. Thus, to release the lock, it is enough to push the locking pin, which will cause the beam to expand and lock the partition wall.

Preferably, the displaceable beam part 4 projects past the wall section, at least in an expanded position, so as to bear direct against the ceiling, floor or walls of the space in which the wall is to be arranged. Furthermore, it is preferred for the projecting end to be provided with a pad 7 of a flexible material, preferably an at least somewhat elastically resilient material with good friction such as rubber which affords satisfactory friction against the walls, floor or ceiling of the cargo space.

Preferably, the partition wall further comprises an opening 11 for accessing a support 9 of the displaceable beam part. This allows the use of a tool 10 adapted to produce a relative displacement of the beam part 4 and the guide 3 when the wall is to be removed. Preferably, the guide and the opening comprise an abutment 11 and the tool 10 comprises a lever mechanism, thereby achieving displacement of the beam part by means of the lever action on the support 9 via the abutment. This provides a gearing effect, which reduces the amount of force required.

Advantageously, the tool is detachable, which means that it will not take up precious cargo space and that the same tool can be used for a plurality of different partition walls.

It is particularly preferred for the tool to comprise a fastening device for attachment to the wall. This fastening device may, for example, comprise a plate having hook-shaped, projecting parts 22, which can be inserted in corresponding openings 23 in the wall. The lever may then be pivotally disposed on the fastening device by means of a shaft 24 or the like, the fastening device also serving as an abutment via the fastening in the guide of the wall.

The wall section comprises at least one wall panel 12 of a self-supporting material, preferably a laminate. The beam may be attached to one side of said wall panel. Furthermore, a second parallel wall panel 13 is preferably arranged on the opposite side in such manner that the beam will be located therebetween in a "sandwich" structure. Moreover, an insulating material 14 may be arranged, in addition to the beam/beams, in the space between the wall panels.

At least one beam must be used in a partition wall. Depending on the size of the partition wall, the field of use, etc., it may be convenient to have a large number of beams. In most cases, however, two or three beams are used, preferably spaced apart and distributed over the width of the partition wall.

Partition walls according to the invention may be manufactured in a number of different sizes depending on the intended application thereof. Partition walls intended, for instance, for lorry transport may, however, have a height which is slightly lower than the floor-to-ceiling height of the cargo space and a width of about 1.20 m, which means that two partition walls will be needed to cover the entire width of the cargo space. Insulating partition walls according to the invention may have a thickness of only a couple of centimetres.

When manufacturing a partition wall as described above, a first wall panel 12 is provided, onto which a guide 3 is fixedly arranged. A beam part is then displaceably arranged in said guide, and actuators and locking means are arranged between the beam part and the guide. Preferably, the beams are pre-assembled with the movable and the fixed parts as indicated above, thus facilitating the assembly of the partition wall.

In the case where two wall panels are used, the insulation may advantageously be arranged on one of the panels, a cut being then made in the position of the beams. The beams are glued in place and the other wall panel then glued thereon.

The partition wall of the invention may be used to fix partitions preferably in the cargo space of lorries and goods wagons for the purpose of separating, for example, temperature zones. This allows carriers to transport goods at different temperatures in the same vehicle. The construction allows carriers to easily mount a light and insulating partition separating such zones.

The construction may also be used to fix partition elements in office premises, cold-storage rooms and the like, where it is desirable to divide the space by means of partition walls.

By integrating, according to the invention, the fastening device into the partition walls, a simple, inexpensive, light-weight and flexible system is obtained. This system makes it possible to apply the partition wall in the desired position without having to consider any standardised mounting positions.

A further advantage is that actuators in the form of springs will maintain a constant friction against the ceiling, floor or walls due to the fact that they are not completely expanded. The spring will maintain the constant pressure for which it is designed during the entire expansion phase. This is important since the ceiling, walls and floor expand and contract as the vehicle moves. Without this adjustability of the spring, the instantaneous pressure would be much higher and lower, respectively. At high pressures, the surfaces on which the pressure is exerted will be damaged and at low pressures the wall will be detached and may fall down.

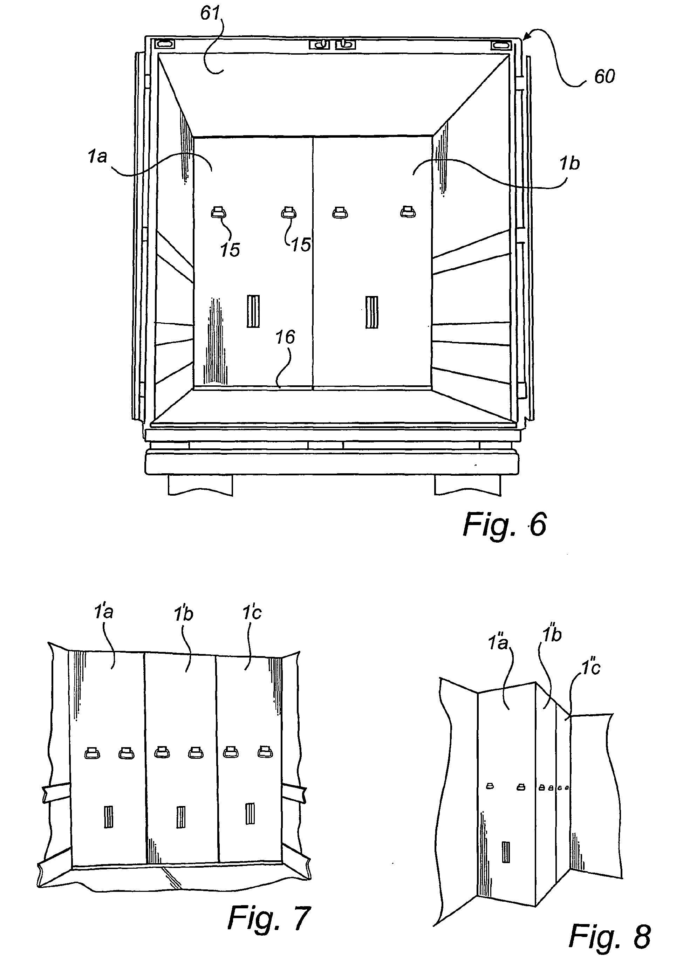

In particular, Figs 6-8 illustrate different applications of partition walls according to the invention. Fig. 6 shows an application, in which a cargo space 61 of a lorry 60 is partitioned off completely by means of two juxtaposed partition walls la and 1b. The height of said partition walls essentially corresponds to the height of the cargo space, and preferably essentially corresponds to the inner standard height in a covered cargo space of a lorry. The width of said partition walls essentially corresponds to half the width of the cargo space, and preferably essentially corresponds to half the inner standard width in a covered cargo space of a lorry. Fig. 7 shows a similar partitioning of a cargo space by means of juxtaposed partition walls 1'a, 1'b and 1'c. In this case, however, the width of the partition walls essentially corresponds to one third of the width of the cargo space, and preferably essentially corresponds to one third of the inner standard width in a covered cargo space of a lorry. Other widths are also conceivable, however, and, preferably, the width of the partition walls is such that the inner width of the cargo space concerned is essentially a multiple of the width of the partition walls.

The partition walls may also be arranged in various angled configurations, and Fig. 8 shows a case where a partition wall 1" a has been arranged essentially perpendicular to two other partition walls 1" b, 1"c arranged sideways. In this manner, small parts of the cargo space, such as a corner area, may be partitioned off.

Furthermore, the partition walls may be provided with handles 15 or the like to allow easy displacement, mounting and removal thereof. The handles may advantageously be disposed relatively high up, preferably about halfway between the central part of the partition walls and their upper edge. Moreover, the partition walls may advantageously be provided with a sealing strip, such as a soft rubber strip 16 or the like, at one or more edges, for the purpose of establishing a seal between the partition wall and the cargo space. It is particularly advantageous to arrange such a strip at the lower edge in order to seal the gap formed by the displaceable parts 4.

The invention has been described above with reference to one embodiment. However, numerous varieties are possible. For instance, other spring or actuator constructions than the ones suggested herein may be used, provided they have an essentially identical function. Furthermore, other types of retraction means are conceivable, and some other type of transmission mechanism may for instance be provided to reduce the force that the user has to apply to operate the retraction means. Other guides than a telescopically displaceable beam are also conceivable. For example, a locking pin with a head may be fixedly arranged in the wall section, said locking pin running in a groove in the displaceable beam. These and other obvious solutions must be regarded as embraced by the scope of protection of the invention as the latter is defined in the appended claims.

## Claims

1. A detachable partition wall for partitioning off cargo spaces in connection with cargo transports, comprising at least one relatively rigid wall section (1) and at least one beam (2) connected thereto for fixing the wall section in the desired position, wherein the wall section (1) comprises two parallel wall panels (12, 13) and a guide (3) attached therebetween, and the beam (2) comprises a part (4) which is displaceable in the guide (3) of the wall section (1), an actuator (5) connected to the displaceable part (4) and the guide (3) to produce a relative movement therebetween, and locking means (6) for locking said displaceable part (4) in relation to the wall section (1) at least in a contracted position,
**characterised in that**
the actuator comprises a gas spring (5), and **in that** one of said wall panels comprises an opening, and the displaceable beam part (4) comprises a support (9) in a corresponding position for applying a tool (10) adapted to produce a relative displacement of the beam part (4) and the guide (3).

2. A partition wall according to claim 1, wherein the guide consists of a second beam part (3) which is fixedly connected to the wall section (1), the displaceable beam part (4) being preferably telescopically displaceable in the second beam part.

3. A partition wall according to claim 1 or 2, wherein the displaceable beam part (4) is disposed so as to project, at least in an expanded position, past the wall section.

4. A partition wall according to claim 3, wherein the displaceable beam part (4), at least at the projecting end, is provided with a pad (7) of a flexible material, preferably an at least somewhat elastically resilient material such as rubber.

5. A partition wall according to any one of the preceding claims, wherein the locking means comprises a closable valve which is connected to the gas spring and which, when in a closed position, locks the gas spring (5) in the then position thereof and, when in an open position, allows expansion or contraction of said spring.

6. A partition wall a.ccording to any one of claims 1 to 4, wherein the locking means comprises a snap lock means (6) which, when in a locked position, locks the displaceable beam part (4) in the then position thereof and, when in an open position, allows displacement thereof.

7. A partition wall according to claim 6, wherein the snap locking means comprises a spring-loaded locking pin (6), which is displaceable in a direction that does not coincide with the direction of displacement of the displaceable beam part and that is preferably perpendicular thereto, said locking pin being adapted to interact with a corresponding recess or opening (8) for allowing displacement of the locking pin in order to lock the displaceable beam part.

8. A partition wall according to any one of the preceding claims, wherein the length of travel in terms of displaceability of the displaceable beam part is at least 10 cm, preferably about 30 cm.

9. A partition wall according to any one of the preceding claims, wherein the guide comprises an abutment (11) and the tool (10) comprises a lever mechanism, displacement of the beam part being achievable by means of the lever action on the support (9) via the abutment.

10. A partition wall according to any one of the preceding claims, wherein the tool (10) is detachable.

11. A partition wall according to any one of the preceding claims, wherein, in addition, an insulating material (14) is arranged in the space between the wall panels.

12. A partition wall according to any one of the preceding claims, which comprises at least two beams, which are spaced apart.

13. A method of manufacturing a detachable partition wall for partitioning off cargo spaces in connection with cargo transports as claimed in any one of claims 1 to 12, comprising at least one wall section (1) and at least one displaceable beam (2) connected thereto for fixing the wall section in the desired position, comprising the steps of:
providing a first wall panel (12);
fixedly connecting a guide (3) to said wall panel;
arranging a second wall panel (13) in such a manner that the guide (3) is positioned between said first (12) and second (13) wall panels; and
displaceably arranging, in said guide, a beam part, and arranging an actuator (5) between said beam part and said guide in order to produce a relative movement therebetween, and locking means (6) for locking the same at least in a contracted position,
**characterised in that**
the actuator comprises a gas spring (5), and **in that** one of said wall panels comprises an opening, and the displaceable beam part comprises a support (9) in a corresponding position for applying a tool (10) adapted to produce a relative displacement of the beam part (4) and the guide (3).

14. A method according to claim 13, comprising the further step of arranging, in addition, an insulating material in the space between the wall panels.

15. A method according to claim 13 or 14, wherein the guide is attached to the first wall panel by gluing.

## Patentansprüche

1. Lösbare Trennwand zum Abteilen von Frachträumen in Verbindung mit Frachttransporten, die mindestens eine relativ starre Wandsektion (1) und mindestens einen damit verbundenen Träger (2) zum Befestigen der Wandsektion in der gewünschten Position umfasst, wobei die Wandsektion (1) zwei parallele Wandfelder (12, 13) und eine dazwischen angebrachte Führung (3) umfasst, und der Träger (2) ein Teil (4), das in der Führung (3) der Wandsektion (1) verschiebbar ist, einen Betätiger (5), der mit dem verschiebbaren Teil (4) und der Führung (3) verbunden ist, um dazwischen eine relative Bewegung zu erzeugen, und Arretierungsmittel (6) zum Arretieren des verschiebbaren Teils (4) in Bezug auf die Wandsektion (1) mindestens in einer zusammengezogenen Position umfasst,
**dadurch gekennzeichnet, dass**
der Betätiger eine Gasfeder (5) umfasst, und dadurch dass eines der Wandfelder eine Öffnung umfasst und das verschiebbare Trägerteil (4) ein Auflager (9) in einer entsprechenden Position umfasst, um ein Werkzeug (10) anzuwenden, das so angepasst ist, dass es eine relative Verschiebung des Trägerteils (4) und der Führung (3) erzeugt.

2. Trennwand nach Anspruch 1, **dadurch gekennzeichnet, dass** die Führung aus einem zweiten Trägerteil (3) besteht, das fest mit der Wandsektion (1) verbunden ist, wobei das verschiebbare Trägerteil (4) vorzugsweise teleskopartig in dem zweiten Trägerteil verschiebbar ist.

3. Trennwand nach Anspruch 1 oder 2, **dadurch gekennzeichnet, dass** das verschiebbare Trägerteil (4) so angeordnet ist, dass es mindestens in einer ausgedehnten Position über die Wandsektion übersteht.

4. Trennwand nach Anspruch 3, **dadurch gekennzeichnet, dass** das verschiebbare Trägerteil (4), mindestens an dem überstehenden Ende, mit einem Polster (7) aus einem flexiblen Material, vorzugsweise einem mindestens etwas elastisch federnden Material wie etwa Gummi, versehen ist.

5. Trennwand nach einem der vorhergehenden Ansprüche, **dadurch gekennzeichnet, dass** die Arretierungsmittel ein schließbares Ventil umfassen, das mit der Gasfeder verbunden ist und das, wenn es in einer geschlossenen Position ist, die Gasfeder (5) in der Position, die sie dann einnimmt, arretiert, und wenn es in einer geöffneten Position ist, die Ausdehnung oder Zusammenziehung der Feder gestattet.

6. Trennwand nach einem der vorhergehenden Ansprüche 1 bis 4, **dadurch gekennzeichnet, dass** die Arretierungsmittel Schnapparretierungsmittel (6) umfassen, die, wenn sie in einer arretierten Position sind, das verschiebbare Trägerteil (4) in der Position, die es dann einnimmt, arretieren und, wenn sie in einer geöffneten Position sind, dessen Verschiebung gestatten.

7. Trennwand nach Anspruch 6, **dadurch gekennzeichnet, dass** die Schnapparretierungsmittel einen federbelasteten Arretierungsstift (6) umfassen, der in einer Richtung verschiebbar ist, die nicht mit der Verschiebungsrichtung des verschiebbaren Trägerteils übereinstimmt und die vorzugsweise senkrecht dazu ist, wobei der Arretierungsstift so angepasst ist, dass er mit einer entsprechenden Aussparung oder Öffnung (8) zusammenwirkt, um die Verschiebung des Arretierungsstifts zwecks Arretierens des verschiebbaren Trägerteils zu gestatten.

8. Trennwand nach einem der vorhergehenden Ansprüche, **dadurch gekennzeichnet, dass** die Weglänge hinsichtlich der Verschiebbarkeit des verschiebbaren Trägerteils mindestens 10 cm, vorzugsweise etwa 30 cm, beträgt.

9. Trennwand nach einem der vorhergehenden Ansprüche, **dadurch gekennzeichnet, dass** die Führung ein Widerlager (11) umfasst und das Werkzeug (10) einen Hebelmechanismus umfasst, wobei die Verschiebung des Trägerteils mittels der Hebelwirkung auf das Auflager (9) über das Widerlager erreicht werden kann.

10. Trennwand nach einem der vorhergehenden Ansprüche, **dadurch gekennzeichnet, dass** das Werkzeug (10) lösbar ist.

11. Trennwand nach einem der vorhergehenden Ansprüche, **dadurch gekennzeichnet, dass** zusätzlich ein Isoliermaterial (14) in dem Raum zwischen den Wandfeldern angeordnet ist.

12. Trennwand nach einem der vorhergehenden Ansprüche, die mindestens zwei Träger umfasst, die mit Zwischenraum angeordnet sind.

13. Verfahren zur Herstellung einer lösbaren Trennwand zum Abteilen von Frachträumen in Verbindung mit Frachttransporten nach einem der Ansprüche 1 bis 12, die mindestens eine Wandsektion (1) und mindestens einen damit verbundenen, verschiebbaren Träger (2) zum Befestigen der Wandsektion in der gewünschten Position umfasst, das folgende Schritte aufweist:
Bereitstellen eines ersten Wandfelds (12);
festes Verbinden einer Führung (3) mit dem Wandfeld;
Anordnen eines zweiten Wandfelds (13) so, dass die Führung (3) zwischen dem ersten (12) und dem zweiten (13) Wandfeld positioniert wird; und
verschiebbares Anordnen eines Trägerteils in der Führung und Anordnen eines Betätigers (5) zwischen dem Trägerteil und der Führung, um eine relative Bewegung dazwischen zu erzeugen, und von Arretierungsmitteln (6) zum Arretieren derselben mindestens in einer zusammengezogenen Position,
**dadurch gekennzeichnet, dass**
der Betätiger eine Gasfeder (5) umfasst, und dadurch dass eines der Wandfelder eine Öffnung aufweist, und dass das verschiebbare Trägerteil ein Auflager (9) in einer entsprechenden Position aufweist, um ein Werkzeug (10) anzuwenden, das so angepasst ist, dass es eine relative Verschiebung des Trägerteils (4) und der Führung (3) erzeugt.

14. Verfahren nach Anspruch 13, das den weiteren Schritt des zusätzlichen Anordnens eines Isoliermaterials in dem Raum zwischen den Wandfeldern umfasst.

15. Verfahren nach Anspruch 13 oder 14, **dadurch gekennzeichnet, dass** die Führung durch Kleben an dem ersten Wandfeld angebracht wird.

## Revendications

1. Paroi de séparation amovible pour séparer des espaces utilitaires en relation avec les transports de chargements, comprenant au moins une section de paroi relativement rigide (1) et au moins un profilé (2) connecté à celle-ci pour caler la section de paroi dans la position désirée, dans laquelle la section de paroi (1) comprend deux panneaux de paroi parallèles (12, 13) et un guide (3) qui y est fixé entre elles, et le profilé (2) comprend une partie (4) qui est mobile dans le guide (3) de la section de paroi (1), un actionneur (5) connecté à la partie mobile (4) et le guide (3) pour y produire un mouvement relatif entre eux, et un moyen de verrouillage (6) pour verrouiller ladite partie mobile (4) en relation avec la section de paroi (1) au moins dans une position rétractée,
**caractérisée en ce que**
l'actionneur comprend un ressort à gaz (5), et **en ce que** l'un desdits panneaux de paroi comprend une ouverture, et la partie de profilé mobile (4) comprend un support (9) dans une position correspondante pour appliquer un outil (10) adapté pour produire un déplacement relatif de la partie de profilé (4) et du guide (3).

2. Paroi de séparation selon la revendication 1, dans laquelle le guide consiste en un deuxième profil é (3) qui est connecté de façon fixe à la section de paroi (1), la partie de profilé mobile (4) étant de préférence mobile de façon télescopique dans la deuxième partie de profilé.

3. Paroi de séparation en accord avec la revendication 1 ou 2, dans laquelle la partie de profilé mobile (4) est disposée de façon à se projeter, au moins dans une position étendue, après la section de paroi.

4. Paroi de séparation selon la revendication 3, dans laquelle la partie de profilé mobile (4), au moins à l'extrémité de projection, est procurée avec un tampon (7) d'un matériau flexible, de préférence un matériau au moins quelque peu résilient tel que le caoutchouc.

5. Paroi de séparation selon l'une quelconque des revendications précédentes, dans laquelle le moyen de verrouillage comprend une soupape pouvant être fermée qui est connectée au ressort à gaz et qui, dans une position fermée, verrouille alors le ressort à gaz (5) dans la position de celui-ci et, dans une position ouverte, permet l'expansion ou la contraction dudit ressort.

6. Paroi de séparation selon l'une quelconque des revendications 1 à 4, dans laquelle le moyen de verrouillage comprend un moyen de verrou d'accrochage (6) dans la position de celui-ci et, dans une position ouverte, permet le déplacement de celui-ci.

7. Paroi de séparation selon la revendication 6, dans laquelle le moyen de verrouillage d'accrochage comprend une broche de verrouillage à ressort (6), qui est mobile dans une direction qui ne coïncide pas avec la direction de déplacement du profilé mobile et qui lui est de préférence perpendiculaire, ladite broche de verrouillage étant adaptée pour interagir avec un évidement correspondant ou une ouverture (8) pour permettre le déplacement de la broche de verrouillage de façon à verrouiller la partie de profilé mobile.

8. Paroi de séparation selon l'une quelconque des revendications précédentes, dans laquelle la longueur de déplacement en termes de mobilité de la partie de profilé mobile est de 10 cm au moins, de préférence 30 cm environ.

9. Paroi de séparation selon l'une quelconque des revendications précédentes, dans laquelle le guide comprend un aboutement (11) et l'outil (10) comprend un mécanisme levier, un déplacement de la partie de profilé étant réalisée au moyen de l'action de levier sur le support (9) via l'aboutement.

10. Paroi de séparation selon l'une quelconque des revendications précédentes, dans laquelle l'outil (10) est détachable.

11. Paroi de séparation selon l'une quelconque des revendications précédentes, dans laquelle, en plus, un matériau isolant (14) est disposé dans l'espace entre les panneaux de paroi.

12. Paroi de séparation selon l'une quelconque des revendications précédentes, qui comprend au moins deux profilés, qui sont espacés l'un de l'autre.

13. Procédé de fabrication d'une paroi de séparation mobile pour séparer des espaces utilitaires en connexion avec les transports de chargements tel que revendiqué dans l'une quelconque des revendications 1 à 12, comprenant au moins une section de paroi (1) et au moins un profilé mobile (2) qui y est connecté pour caler la section de paroi dans la position désirée, comprenant les étapes de :
fourniture d'un premier panneau de paroi (12) ;
la connexion d'un guide (3) de façon fixe audit panneau de paroi ;
la disposition d'un deuxième panneau de paroi (13) de telle façon que le guide (3) soit positionné entre lesdits premier (12) et deuxième (13) panneaux de paroi ; et
la disposition de façon mobile, dans ledit guide, d'une partie de profilé, et la disposition d'un actionneur (5) entre ladite partie de profilé et ledit guide de façon à y produire entre eux un mouvement relatif, et un moyen de verrouillage (6) pour verrouiller celui-ci au moins dans une position rétractée,
**caractérisé en ce que**
l'actionneur comprend un ressort à gaz (5), et **en ce que** l'un desdits panneaux de paroi comprend une ouverture, et la partie de profilé mobile comprend un support (9) dans une position correspondante pour appliquer un outil (10) adapté pour produire un déplacement relatif de la partie de profilé (4) et du guide (3).

14. Procédé selon la revendication 13, comprenant l'étape supplémentaire de disposition, de plus, d'un matériau isolant dans l'espace entre les panneaux de paroi.

15. Procédé selon la revendication 13 ou 14, dans lequel le guide est fixé au premier panneau de paroi par collage.
